# EUROPÄISCHE PATENTANMELDUNG

(11) **EP 0 529 740 A1**
(43) Veröffentlichungstag der Anmeldung: **03.03.1993**
(21) Anmeldenummer: 92202661.2
(22) Anmeldetag: 21.08.1992
(51) Int. Cl.: H02G 3/28

(54) **Fussbodenschacht**

(30) Priorität: 24.08.1991 DE 4128116
(71) Anmelder: SCHMIDT REUTER INGENIEURGESELLSCHAFT mbH & PARTNER KOMMANDITGESELLSCHAFT, D-50823 Köln (DE)
(72) Erfinder: Soethout, Freddie, Dipl.-Ing., W-5024 Pulheim-Dansweiler (DE)
(74) Vertreter: Selting, Günther, Dipl.-Ing.

(57) **Zusammenfassung**

Der Fußbodenschacht (12) weist einen aus Kunststoff bestehenden Schachtkörper (13) mit seitlichen Anschlüssen (15) auf, an die Kanalelemente (11) angeschlossen werden können. Nach dem Verlegen des Fußbodenschachts (12) und der Kanalelemente (11) wird die Kanalstruktur mit Estrich überdeckt, wobei der Fußbodenschacht aus dem Estrich herausragt. Der überstehende Bereich, der eine geschlossene Oberwand (19) hat, wird später mit einem Werkzeug bündig mit dem Estrich abgetrennt.

## Beschreibung

Die Erfindung betrifft einen Fußbodenschacht zum Einbau in Fußbodenestrich.

Ein Fußbodenschacht mit den Merkmalen des Oberbegriffs des Patentanspruchs 1 ist bekannt aus DE 38 37 056 A1. Dieser Fußbodenschacht wird im Rahmen eines Installationskanalsystems zum Einbau in Fußbodenestrich eingesetzt, um mehrere Wellenprofilplatten, in die Kabel und Leitungen einzogen werden können, untereinander zu verbinden und eine Installationsöffnung zu bilden.

Aus DE-GM 71 05 105 ist ein Kabelkanal für in Unterflurinstallationen bekannt, der auf einem Kabelkanal aufgesetzt wird und dessen Höhe so bemessen ist, daß er im auf den Kabelkanal aufgesetzten Zustand mit seinem oberen Ende unterhalb der Estrichoberseite liegt. Die offene Oberseite des Schachtkörpers ist entweder unterhalb des Estrichniveaus mit einem dünnwandigen Profildeckel aus Kunststoff verschlossen oder mit einem über das Estrichniveau aufragenden verschlußstopfen aus Schaumstoff oder einem anderen leicht schneidbaren Material. Im zweiten Fall wird der Verschlußstopfen während der Estricharbeiten auf Oberkante Estrich heruntergeschnitten.

Die bekannten Fußbodenschächte haben den Nachteil, daß sie entweder mit einer Estrichschicht überdeckt werden, die, um Zugang zu dem Schacht zu erhalten, zerstört werden muß, wobei Estrichteile in den Schacht hineinfallen können, oder daß sie mit einem aus Fremdmaterial bestehenden schneidbaren vollen Stopfen verschlossen sind, der ebenfalls zerstört werden muß, um Zugang zu dem Schacht zu erhalten, wobei ebenfalls Teile in den Schacht heineinfallen können.

Der Erfindung liegt die Aufgabe zugrunde, einen Fußbodenschacht der im Oberbegriff des Patentanspruchs 1 angegebenen Art zu schaffen, der nach der Herstellung des Estrich leicht geöffnet werden kann, ohne daß Materialteile hineinfallen.

Die Lösung dieser Aufgabe erfolgt erfindungsgemäß mit den im Patentanspruch 1 angegebenen Merkmalen.

Der erfindungsgemäße Fußbodenschacht weist einen Schachtkörper mit geschlossener Oberwand auf. Ein solcher Schachtkörper wird lediglich auf den Unterboden aufgesetzt, wobei seine Anschlüsse mit einem oder mehreren auf dem Unterboden verlegten Kanälen verbunden werden. Dann wird die Kanalstruktur mit Estrich übergossen, wobei die geschlossene Oberwand verhindert, daß Estrichmaterial in das Innere des Schachtkörpers gelangt. Dabei kann der Estrich auch in dünnflüssiger Form als selbstnivellierender Fließestrich aufgebracht werden, ohne daß die Gefahr besteht, daß Estrich in den Fußbodenschacht eindringt. Nachdem die Oberfläche des Estrichs glattgeworden ist oder geglättet wurde, bzw. nach dem Aushärten des Estrichs, steht der obere Bereich des Schachtkörpers über die Estrichschicht hinaus vor.

Dieser obere Bereich hat eine so geringe Wandstärke, daß er bündig mit der Estrichoberfläche leicht abgetrennt werden kann. Die wandstärke ist in diesem Bereich so gering, daß das Abtrennen auch mit einem Handwerkzeug, z.B. einem Messer oder Teppichmesser, erfolgen kann. Die dabei entstehende Kappe kann fortgeworfen werden. Auf diese Weise ist eine einfache Anpassung der Schachtlänge an die Estrichhöhe möglich, ohne daß zuvor gemessen werden müßte und Maßabtrennungen durchzuführen wären.

Der Schachtkörper weist vorzugsweise ein durch Tiefziehen einer Folie hergestelltes Basisteil aus Kunststoff auf. Ein solcher Schachtkörper hat an allen Stellen etwa die gleiche Wandstärke, die nur durch die beim Tiefziehen entstandenen Dickenänderungen variiert. Er ist leichtgewichtig und kann auf sehr einfache Weise kostengünstig hergestellt werden. Auch das Abtrennen des oberen Bereichs ist bei einem derartigen Schachtkörper leicht möglich.

Der Schachtkörper muß nicht notwendigerweise aus einem einstückigen Teil bestehen, sondern er kann auch mehrere aufeinandergesetzte Teile aufweisen, die ggf. teleskopisch auseinanderziehbar sind. Es können auch mehrere verschachtelt aufeinandergesetzte Teile vorhanden sein, die sich ineinander bis zu unterschiedlichen Höhen erstrecken und von denen mindestens das oberste Teil eine geschlossene Oberwand hat. Dadurch kann auch das Abschneiden auf der Baustelle entfallen, wenn die aus dem Estrich herausragenden Schachtteile nach dem Aushärten des Estrichs abgenommen werden.

Ferner ist es möglich, im Inneren des Schachtkörpers einen Deckel anzubringen, der nach dem Abtrennen der Oberwand den Schachtkörper gegen Hereinfallen von Fremdkörpern absperrt. Ein solcher Deckel kann von unten her in den Schachtkörper eingeführt werden und er weist vorteilhafterweise einen Griff auf, um ihn später nach oben herausziehen zu können.

Die Erfindung betrifft ferner ein Verfahren zum Einbau eines Fußbodenschachtes in Estrich. Bei diesem Verfahren wird der erfindungsgemäße Fußbodenschacht in den Estrich eingebettet und erst nach dem Verlegen des Estrichs wird der über den Estrich herausragende Bereich abgetrennt.

Im folgenden werden unter Bezugnahme auf die Zeichnungen Ausführungsbeispiele der Erfindung näher erläutert.

Es zeigen:
- Fig. 1: eine schematische perspektivische Darstellung eines Unterbodens mit einem darauf verlegten Kabelkanal, der an einen Fußbodenschacht angeschlossen ist, vor Aufbringung des Estrichs,
- Fig. 2: eine Seitenansicht des Fußbodenschachts nach Figur 1,
- Fig. 3: einen Fußbodenschacht mit einem darin untergebrachten separaten Deckel und
- Fig. 4: einen Fußbodenschacht, bei dem der Schachtkörper einen aufgesetzten Deckel aufweist.

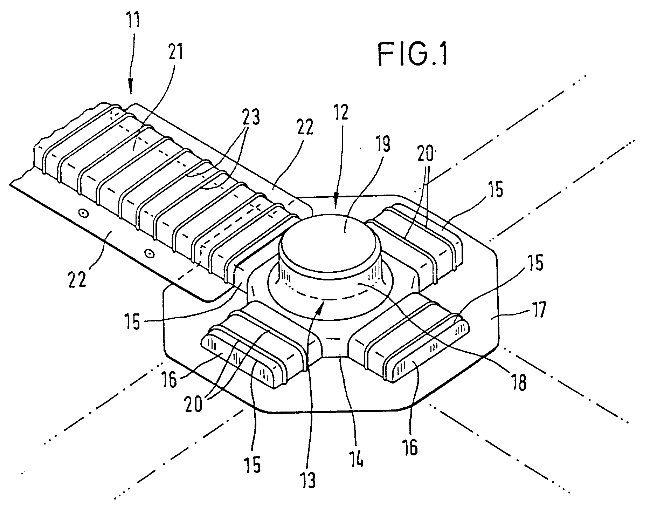

Gemäß Figur 1 ist auf dem Unterboden 10 ein Kanal 11 für Kabel oder Schläuche verlegt. Dieser Kanal 11 führt zu einem Fußbodenschacht 12, der einen senkrecht durch den später aufgebrachten Estrich hindurchgehenden Schachtkörper 13 aufweist und nach Beendigung der Herstellung des Oberbodens einen Zugang zu dem Kanal 11 ermöglicht.

Der Schachtkörper 13 erweitert sich zum unteren Ende hin in einen auf dem Unterboden ruhenden Hohlkörper 14, von dem sich hohle Anschlüsse 15 sternförmig in verschiedene Richtungen erstrecken. Diese Anschlüsse 15 sind nach unten offene Schalen, deren Ränder Stützflächen bilden, auf denen der Schachtkörper 13 ruht. Die Enden der Anschlüsse 15 sind jeweils durch eine einstückig angeformte Stirnwand 16 verschlossen. Diese Stirnwand kann abgetrennt werden. Der Kohlkörper 14 und die Anschlüsse 15 gehen in einen seitlich abstehenden Aufsetzflansch 17 über, der flach auf dem Unterboden 10 aufliegt und die Umfangskontur des gesamten Fußbodenschachtes (in Draufsicht) definiert. Erforderlichenfalls können am oder unter dem Umfangsflansch 17 Dichteinrichtungen vorgesehen sein, die im Falle etwaiger Unebenheiten das Unterbodens verhindern, daß Estrich unter dem Umfangsflansch 17 hindurch in das Innere des Fußbodenschachts 12 eindringt. Die den von dem Hohlkörper 14 aufragenden im wesentlichen zylindrischen Bereich 18 des Schachtkörpers 13 nach oben begrenzende Oberwand 19 ist geschlossen ausgebildet. Der gesamte Schachtkörper 13 ist dagegen unterhalb des Hohlkörpers 14 und unterhalb der Anschlüsse 15 nach unten hin vollständig offen, jedoch wird er seitlich durch den Umfangsflansch 17 begrenzt, der diese Öffnung umschließt. Der sich an den Hohlkörper 14 und die Anschlüsse 15 seitlich anschließende Umfangsflansch bildet somit die einzige Bodenwand.

Der gesamte Schachtkörper 13 ist als einstückiges Kunststoffteil aus einem Folienmaterial von einer Stärke von etwa 1 bis 1,5 mm durch Tiefziehen hergestellt. Er weist keine sich gegenseitig überlappenden Wandbereiche auf und die Seitenwände sind im Bereich der Anschlüsse 15 sowie in dem aufragenden Bereich 18 leicht abgeschrägt, so daß ein Entformen aus der Tiefziehform möglich ist und daß gleichzeitig auch mehrere gleiche Fußbodenschächte aufeinanderstapelbar sind.

Gemäß Figur 1 sind den Anschlüssen 15 querlaufende Umfangssicken 20 angeformt. Das Kanalelement 11 besteht, ebenso wie die Anschlüsse 15, aus einem nach unten offenen Schalenkörper 21 mit seitlich abstehenden Aufsetzflanschen 22 und querlaufenden Umfangssicken 23. Das Kanalelement 11 kann somit mit einem Ende auf einen der Anschlüsse 15 aufgesetzt werden, wobei seine Umfangssicken 23 auf den Umfangssicken 20 des Anschlusses verrastet werden. Die Aufsetzflansche 22 des Kanalelements 11 legen sich dabei auf den Aufsetzflansch 17 des Fußbodenschachtes 12 auf.

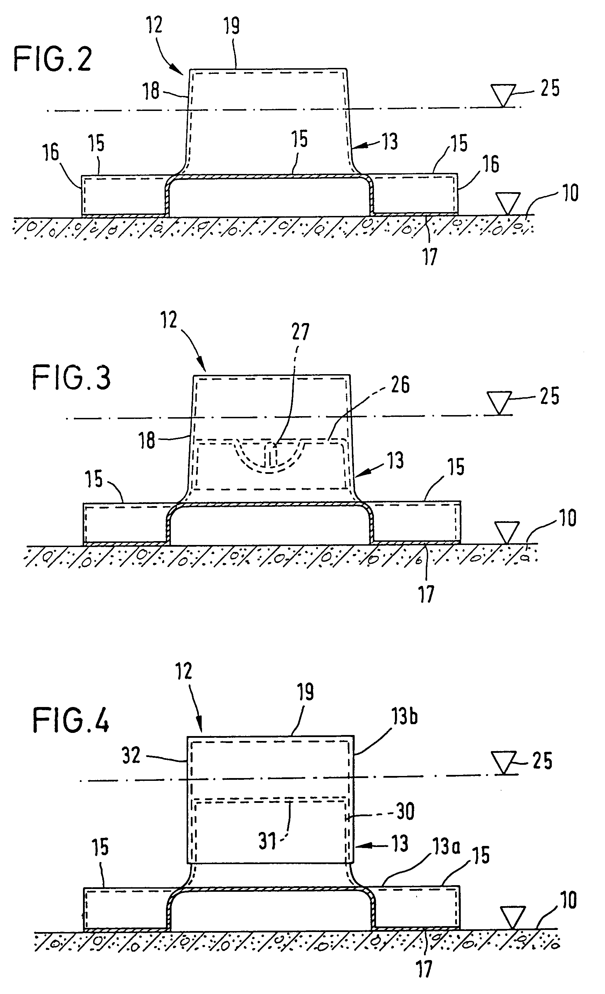

Figur 2 zeigt den Fußbodenschacht 12, der mit seinem Aufsetzflansch 17 auf dem Unterboden 10 ruht und der nach unten hin vollständig offen, zu den Seiten jedoch entweder durch die Stirnwände 16 oder durch den Anschluß eines Kanalelementes abgeschlossen ist. Der Estrich wird bis zu der Höhe 25 aufgefüllt, also bis zu einer Höhe, in der sich der im wesentlichen zylindrische Bereich 18 befindet. Nach dem Abbinden des Estrichs kann anschließend der daraus hervorragende Bereich des Schachtkörpers 13 abgetrennt werden. Während des Verlegens des Estrichs ist sichergestellt, daß kein Estrichmaterial in das Innere des Schachtkörpers fällt.

Der in Figur 3 dargestellte Fußbodenschacht 12 ist in gleicher Weise ausgebildet wie derjenige nach Figur 1 und Figur 2, jedoch enthält er zusätzlich im Inneren des im wesentlichen zylindrischen Bereichs 18 einen Deckel 26, der in dem Schachtkörper 13 festgeklemmt ist und der nach dem Entfernen des über den Estrich überstehenden Teiles das Hineinfallen von Gegenständen in den Schacht verhindert. Der Deckel 26 besteht aus einem durch Tiefziehen verformten Folienteil, in dem ein Griff 27 ausgeformt ist, der das spätere Herausziehen des Deckels aus dem Schacht ermöglicht. Der Deckel 26 kann auch durch einen anderen Körper, z.B. aus Styropor, ersetzt werden.

Bei dem Ausführungsbeispiel von Figur 4 ist der Schachtkörper 13 zweiteilig. Er besteht aus einem einstückigen Unterteil 13a, das die Anschlüsse 15 sowie einen aufragenden Schachtstutzen 30 bildet, sowie einem auf den Schachtstutzen 30 aufgesetzten kappenförmigen Oberteil 13b, an dem sich die Oberwand 19 befindet. Der Schachtstutzen 30 weist eine eigene geschlossene Oberwand 31 auf, die von dem Oberteil 13b überdeckt wird. Das Oberteil 13b umschließt mit seiner im wesentlichen zylindrischen Seitenwand 32 den Schachtstutzen 30 auf dem es festgeklemmt ist. Der Estrich wird bis zur Höhe 25 aufgetragen, die oberhalb der Oberwand 31 liegt. Das Abschneiden erfolgt im Bereich des Oberteils 13b. Nach dem Abschneiden ist der Schacht noch durch die Oberwand 31 verschlossen, die erst später, nämlich für die Kabelmontage, aufgeschnitten wird.

## Patentansprüche

1. Fußbodenschacht zum Einbau in Fußbodenestrich, mit einem auf einen Unterboden (10) aufsetzbaren hohlen Schachtkörper (13), der im unteren Bereich seitliche Anschlüsse (15) für Unterflur-Kanalelemente (11) aufweist, wobei der Schachtkörper (13) eine geschlossene Oberwand (19) hat,
**dadurch gekennzeichnet,**
daß die Länge des Schachtkörpers im oberen Bereich dadurch veränderbar ist, daß der die Oberwand (19) enthaltende Teil der Umfangswand nach dem Verlegen des Estrichs auf der Höhe (25) des Estrichs abgeschnitten werden kann.

2. Fußbodenschacht nach Anspruch 1,
**dadurch gekennzeichnet,** daß die Wandstärke im oberen Bereich des Schachtkörpers (13) etwa 1,5 mm beträgt.

3. Fußbodenschacht nach Anspruch 1 oder 2,
**dadurch gekennzeichnet,** daß der Schachtkörper (13) ein einstückiges, durch Tiefziehen einer Folie hergestelltes Basisteil aufweist.

4. Fußbodenschacht nach einem der Ansprüche 1 bis 3,
**dadurch gekennzeichnet,** daß der Schachtkörper (13) nach unten hin offen ist, wobei die Öffnung mindestens so groß ist wie die Oberwand (19).

5. Fußbodenschacht nach Anspruch 4,
**dadurch gekennzeichnet,** daß die Anschlüsse (15) unten offene Schalen sind, deren Ränder Stützränder bilden, auf denen der Schachtkörper (13) ruht.

6. Fußbodenschacht nach einem der Ansprüche 1 bis 5,
**dadurch gekennzeichnet,** daß der Schachtkörper (13) einen darin festgeklemmten herausnehmbaren Deckel (26) enthält.

7. Fußbodenschacht nach einem der Ansprüche 1 bis 6,
**dadurch gekennzeichnet,** daß der Schachtkörper (13) ein Unterteil (13a) und ein darauf aufgesetztes Oberteil (13b) mit der geschlossenen Oberwand (19) aufweist.

8. Fußbodenschacht nach einem der Ansprüche 1 bis 7,
**dadurch gekennzeichnet,** daß der Schachtkörper (13) am unteren Ende einen seitlich abstehenden, die Anschlüsse (15) umschließenden Aufsetzflansch (17) aufweist.

9. Fußbodenschacht nach Anspruch 8, **dadurch gekennzeichnet,** daß
der Aufsetzflansch (17) mit Klebebändern zum Abdichten gegen den Unterboden (10) oder eine darauf gelegte Folie unterlegt ist.

10. Fußbodenschacht nach einem der Ansprüche 1 bis 9,
**dadurch gekennzeichnet,** daß die Enden der Anschlüsse (15) durch abtrennbare Stirnwände (16) verschlossen sind.

11. Fußbodenschacht nach einem der Ansprüche 1 bis 10,
**dadurch gekennzeichnet,** daß die Anschlüsse (15) angeformte Umfangssicken (20) aufweisen.

12. Verfahren zum Einbau eines Fußbodenschachtes (12) in Estrich, bei dem der Fußbodenschacht auf einen Unterboden (10) aufgesetzt wird, auf den der Estrich aufgetragen wird, **gekennzeichnet** durch die Verwendung eines Fußbodenschachtes (12) nach einem der Ansprüche 1 bis 9, bei dem ein Bereich des Schachtkörpers über den Estrich hinausragt und erst nach dem Verlegen des Estrichs durch Aufschneiden der Umfangswand abgetrennt wird.
